(19)

Europäisches
Patentamt
European
Patent Office
Office européen
des brevets

(11) **EP 1 953 764 A1**

(12) **EUROPEAN PATENT APPLICATION**
published in accordance with Art. 158(3) EPC

(43) Date of publication:
**06.08.2008 Bulletin 2008/32**

(21) Application number: **06833179.2**

(22) Date of filing: **22.11.2006**

(51) Int Cl.:
***G21B 3/00*** *(2006.01)*

(86) International application number:
**PCT/JP2006/323367**

(87) International publication number:
**WO 2007/061019 (31.05.2007 Gazette 2007/22)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.11.2005 JP 2005341150**

(71) Applicant: **Arata, Yoshiaki**
**Higashinada-ku**
**Kobe-shi**
**Hyogo 658-0057 (JP)**

(72) Inventor: **Arata, Yoshiaki**
**Higashinada-ku**
**Kobe-shi**
**Hyogo 658-0057 (JP)**

(74) Representative: **Schwabe - Sandmair - Marx**
**Stuntzstrasse 16**
**81677 München (DE)**

(54) **METHOD OF GENERATING HEAT ENERGY AND APPARATUS FOR GENERATING HEAT ENERGY**

(57)    A thermal energy generating method and a thermal energy generating device, which have an excellent efficiency in generating thermal energy and are suitable for practical use, are provided. The thermal energy generating method uses a thermal energy generating device including a first space and a second space which are separated from each other by a first vessel having deuterium permeability so as to generate thermal energy. A substance having deuterium absorbability is enclosed in a vacuum state in the second space. The method comprises the steps of: supplying deuterium gas to the first space; and maintaining a temperature of the deuterium gas in the first space within a predetermined range of temperature so that deuterium molecules of the deuterium gas in the first space pass through the first vessel as deuterium ions.

FIG.1

**Description**

TECHNICAL FIELD

The present invention relates to a thermal energy generating method and a thermal energy generating device, which have an excellent efficiency in generating thermal energy and are suitable for practical use.

BACKGROUND ART

A method for generating deuterium gas under ultrahigh pressure using electrolysis is known (see Reference 1 by the inventor of the present application, for example). This method is also introduced in a U.S. science technology magazine, "21st CENTURY SCIENCE & TECHNOLOGY" (1995), which introduces the inventor of the present application as a pioneer of "ultrahigh temperature fusion" and "cold fusion". The structure of the deuterium generating device used for the method is substantially the same as that of a thermal energy generating device named as "DS-Cathode (Double Structure Cathode)" by the inventor of the present application. The deuterium generating device is a root of the research on thermal fusion through many years by the inventor of the present invention.

The DS-Cathode developed by the inventor of the present application is of worldwide fame in that the DS-Cathode has proved the existence of solid state fusion (cold fusion). Today, there are no researchers who do not know the above fact among the researchers of the solid state fusion (cold fusion). For example, Reference 2 by the inventor of the present application discloses a method for generating thermal energy by causing solid state fusion (cold fusion) using a DS-Cathode.

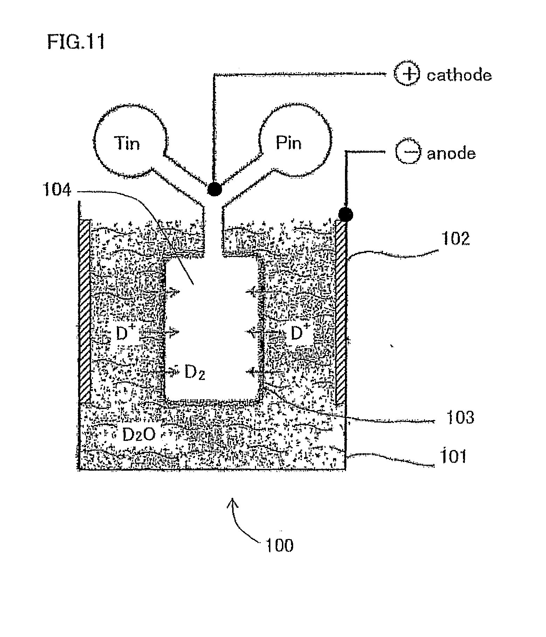

Figure 11 shows a structure of a DS-Cell 100, which has a similar structure to a DS-Cathode.

The DS-Cell 100 includes an electrolytic cell 101, a cylindrical platinum electrode 102 located inside the electrolytic cell 101, and a palladium (Pd) metal vessel located inside the platinum electrode 102. A deuterium oxide solution ($D_2O$) is injected in the electrolytic cell 101, the deuterium oxide solution including LiOH as an electrolyte. A space 104 is formed inside the metal vessel 103. Ultrafine palladium (Pd) powder called Pd-black is enclosed in a vacuum state as a sample in the space 104. The metal vessel 103 is configured to take gas generated in the space 104 to the outside.

The deuterium oxide solution ($D_2O$) including LiOH as the electrolyte in the electrolytic cell 101 is electrolyzed to generate deuterium ions, $D^+$, when an electric field is applied to the DS-Cell 100 with the platinum electrode 102 as an anode and the metal vessel 103 as a cathode. The deuterium ions, $D^+$, pass through the metal vessel 103, and the deuterium ions, $D^+$, that have passed through the wall of the metal vessel 103 are introduced into the metal vessel 103 as deuterium atoms, D. As a result, the metal vessel 103 will be filled with gas of intermingled deuterium atoms, D, and the deuterium gas, $D_2$, as time passes. In addition, the pressure level in the metal vessel 103 will reach a range from several thousand to several tens of thousands atmospheres due to the deuterium gas, $D_2$, generated in the metal vessel 103 as the electrolysis continues. Under such a pressure level, the deuterium atom, D, is absorbed by the ultrafine palladium (Pd) powder. Such absorption of the deuterium atom, D, occurs as 2 to 4 of deuterium atoms, D, are cohered into innumerable octahedrons of a crystal lattice of the ultrafine palladium (Pd) powder. The structure in which a deuterium atom, D, is cohered in the ultrafine palladium (Pd) powder is named as "Pycnodeuterium" or "Solid-deuteron" by the inventor of the present application. The Pycnodeuterium or Solid-deuteron is in a high density state corresponding to deuterium gas in several hundred million atmospheres.

In the Pycnodeuterium or Solid-deuteron, a helium gas is generated in addition to thermal energy when a fusion reaction takes place for a plurality of deuterium atoms, D. An equation for this reaction is provided below.

$$^2D + {}^2D = {}^4He + \text{lattice energy (23.8MeV)}$$

This fusion reaction progresses gently without generating any neutrons, and therefore such a fusion reaction is extremely desirable in view of industrial applicability and environmental preservation compared with a well known DD thermal fusion reaction in an ultrahigh temperature state, in which tritium, T, and a neutron are generated by an ultra-radical collision of deuterium atoms.

Reference 1: US patent No. 5647970

Reference 2: International Publication No. WO 95/35574

DISCLOSURE OF THE INVENTION

The conventional method described above, however, is only able to obtain about 110W output energy for 100W input energy. The efficiency in generating thermal energy is poor, and therefore a problem arises that the conventional method is not suitable for practical use.

The present invention is intended to solve the conventional problem described above, and the objective of the present invention is to provide a thermal energy generating method and a thermal energy generating device, which have an excellent efficiency in generating thermal energy and are suitable for practical use.

A thermal energy generating method according to the present invention uses a thermal energy generating device including a first space and a second space separated by a first vessel having deuterium permeability, in which a substance having deuterium absorbability is enclosed in the vacuum state in the second space, the method comprising the steps of: supplying deuterium gas to the first space; and maintaining a temperature of the deuterium gas in the first space within a predetermined range so that deuterium molecules of the deuterium gas in the first space pass through the first vessel as deuterium ions, thereby achieving the objective described above.

According to one embodiment of the present invention, the first space is a space formed between the first vessel and a second vessel located outside the first vessel, and the second space is a space formed inside the first vessel.

According to another embodiment of the present invention, the first space is a space formed inside the first vessel, and the second space is a space formed between the first vessel and a second vessel located outside the first vessel.

A thermal energy generating device according to the present invention is for generating thermal energy, including: a first vessel having deuterium permeability; and a first space and a second space separated by the first vessel, in which a substance having deuterium absorbability is enclosed in a vacuum state in the second space, the thermal energy generating device further including: a section for supplying deuterium gas to the first space; and a section for maintaining a temperature of the deuterium gas in the first space within a predetermined range of temperature so that deuterium molecules of the deuterium gas in the first space pass through the first vessel as deuterium ions.

According to one embodiment of the present invention, the thermal energy generating device further includes a second vessel located outside the first vessel, and the first space is a space formed between the first vessel and the second vessel, and the second space is a space formed inside the first vessel.

According to another embodiment of the present invention, the thermal energy generating device further includes a second vessel located outside the first vessel, and the first space is a space formed inside the first vessel and the second space is a space formed between the first vessel and the second vessel.

According to the present invention, a thermal energy generating method and a thermal energy generating device, which have an excellent efficiency in generating thermal energy and are suitable for practical use, are provided.

BRIEF DESCRIPTION OF THE DRAWINGS

Figure **1** is a diagram showing an exemplary structure of a thermal energy generating device according to one embodiment of the present invention.
Figure **2** is a diagram showing an exemplary result of an experiment using the thermal energy generating device.
Figure **3** is a diagram showing an exemplary result of a comparison experiment for comparing with the experimental result of Figure **2**.
Figure 4 is a diagram showing an exemplary result of another comparison experiment for comparing with the experiment result of Figure **2**.
Figure **5** is a diagram showing an exemplary result of a spectrum analysis for the gas generated in the inner space **4** of the thermal energy generating device **1**.
Figure **6** is a diagram showing a heater control system.
Figure **7** is a diagram showing an exemplary measurement result of a current **I** flowing through the heater **8**, in the case where the heater control system shown in Figure **6** is set to keep the temperature Tout constant.
Figure **8** is a diagram showing an exemplary result of an experiment using the thermal energy generating device.
Figure **9** is a diagram showing another exemplary result of an experiment using the thermal energy generating device 1.
Figure **10** is a diagram showing an exemplary structure of a thermal energy generating device according to another embodiment of the present invention.
Figure **11** is a diagram showing a structure of a conventional DS-Cell.

| | |
|---|---|
| **1, 10** | thermal energy generating device |
| **2, 12** | vessel |

(continued)

| 3, 13 | vessel |
|---|---|
| 4, 14 | space (inner space) |
| 5, 15 | space (outer space) |
| 6, 16 | open / close valve |
| 7, 17 | open / close valve |
| 8, 18 | heater |

BEST MODE FOR CARRYING OUT THE INVENTION

Hereinafter, embodiments of the present invention will be described with reference to the drawings.

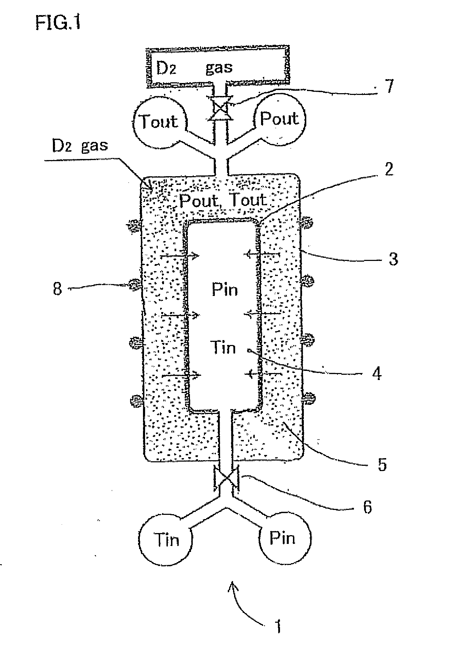

Figure **1** shows an exemplary structure of a thermal energy generating device **1** according to one embodiment of the present invention. The thermal energy generating device **1** is an improved version of a conventional DS-Cell and generates thermal energy using the same principle of the conventional DS-Cell. The thermal energy generating device **1** is also referred to as a DS-Reactor.

The thermal energy generating device **1** includes a vessel **2** made of a substance having deuterium permeability and a vessel **3** located outside of the vessel **2**. The vessel **2** is made of palladium, for example. The vessel **3** is made of stainless steel, for example.

A space **4** is formed inside the vessel **2**. In the space **4,** a substance having deuterium absorbability (e.g. ultrafine palladium powder) is enclosed as a sample in a vacuum state. The vessel **2** is configured to take gas generated in the space **4** out of the thermal energy generating device 1 through an open / close valve **6**.

A space **5** is formed between the vessel **2** and the vessel **3** in such a manner to surround the vessel **2**. Deuterium gas, $D_2$, is supplied into the space **5**. The vessel **3** is configured to supply deuterium gas, $D_2$, from outside the thermal energy generating device **1** through an open / close valve **7** into the space **5**.

Metals, such as palladium, nickel, titanium, zirconium and vanadium, as well as alloys, such as $LaNi_5$, $Na_2WO_2$ and $Zr_3NiO$ may be used as a substance having deuterium permeability. As for the substance having deuterium permeability, it is desirable to use a substance that has as high deuterium permeability as possible.

Ultrafine powder of a metal having deuterium permeability described above as well as alloys, such as $Zr_3NiO$, may be used as a substance having deuterium absorbability. However, it is not necessarily required that the substance used as a material for the vessel **2** (e.g. metal) be the same as the substance enclosed in the space **4** (e.g. ultrafine powder of metal). The substance used as a material for the vessel **2** (e.g. metal) may be different from the substance enclosed in the space **4** (e.g. ultrafine powder of metal) . As for the substance having deuterium absorbability, it is desirable to use a substance that has as much deuterium absorbability as possible.

Herein, "ultrafine powder" of metal refers to ultrafine powder of metal that is several hundred angstroms or less in diameter. For example, palladium powder called "Pd-black" and palladium powder called "nano-Pd" are examples of "ultrafine powders" of palladium.

"Pd-black" is from 150 to 400 angstrom in diameter and has deuterium absorbability two-dimensionally at least on the surface of the powder. Such ultrafine powder is called " Pd-black" because powder having such a minute diameter among the kinds of palladium powder looks "black" when observed with naked eyes.

"Nano-Pd" is powder of palladium more minute than "Pd-black" . Two types of "nano-Pd" exist, which are "isolated type" nano-Pd that is 150 angstrom or less in diameter and "embedded type" nano-Pd that is 50 angstrom or less in diameter. Both types of the nano-Pd have deuterium absorbability three-dimensionally in the whole powder.

The thermal energy generating device 1 further includes a heater **8** for maintaining the temperature of deuterium gas, $D_2$, in the space 5 within a predetermined range of temperature. In the example shown in Figure **1**, the heater **8** is provided in a coiled manner around the vessel **3** and is configured to control the temperature of the vessel **3** to control the temperature of deuterium gas, $D_2$, in the space **5**.

When the temperature of the deuterium gas, $D_2$, in the space 5 and the temperature of the vessel **2** are in the range of 70°C to 100°C by the application of heat by the heater **8,** deuterium molecules, $D_2$, of the deuterium gas, $D_2$, in the space **5** pass through the vessel **2** as deuterium ions, $D^+$, and then, the deuterium ions, $D^+$, that have passed through the vessel **2** are introduced into the space **4** as a deuterium atom, D. As a result, the space **4** will be filled with gas of intermingled deuterium atoms, D, and the deuterium gas, $D_2$, as time passes. As a result, the pressure level in the space **4** will be almost the same as the pressure level of the deuterium gas $D_2$ in the space **5**. Accordingly, if the pressure level of the deuterium gas, $D_2$, in the space **5** reaches a range from several thousand to several tens of thousands atmospheres, the pressure level in the space **4** will also reach almost the same state. Under such a pressure level, the deuterium atom, D, is absorbed by the substance having deuterium absorbability, which is enclosed in the space **4**. Such absorption of the deuterium atom, D, occurs as several deuterium atoms, D, are cohered into innumerable octahedrons of a crystal lattice of the substance having deuterium absorbability, which is enclosed in the space **4**. In this manner, "Pycnodeuterium" or "Solid-deuteron" is generated in the space **4**, and a fusion reaction takes place for a plurality of deuterium atoms, D, in this Pycnodeuterium or Solid-deuteron, so that a helium gas is generated in addition to thermal energy. An equation for this reaction is provided below.

$$^2D + {}^2D = {}^4He + \text{lattice energy (23.8MeV)}$$

The principle of this thermal energy generation is the same as the principle of the thermal energy generation for the DS-Cell **100** described above. This fusion reaction progresses gently without generating any neutrons, and therefore such a fusion reaction, is extremely desirable in view of industrial applicability and environmental preservation compared with a well known DD thermal fusion reaction in an ultrahigh temperature state, in which tritium, T, and a neutron are generated by an ultra-radical collision of deuterium atoms.

In the following description, the space **4** inside the vessel **2** having deuterium permeability is referred to as an "inner space **4**", the temperature of the inner space **4** is denoted as $T_{in}$, and the pressure of the inner space **4** is denoted as $P_{in}$. In addition, the space **5** outside the vessel **2** having deuterium permeability is referred to as an "outer space **5**", the temperature of the outer space **5** is denoted as Tout, and the pressure of the outer space **5** is denoted as $P_{out}$

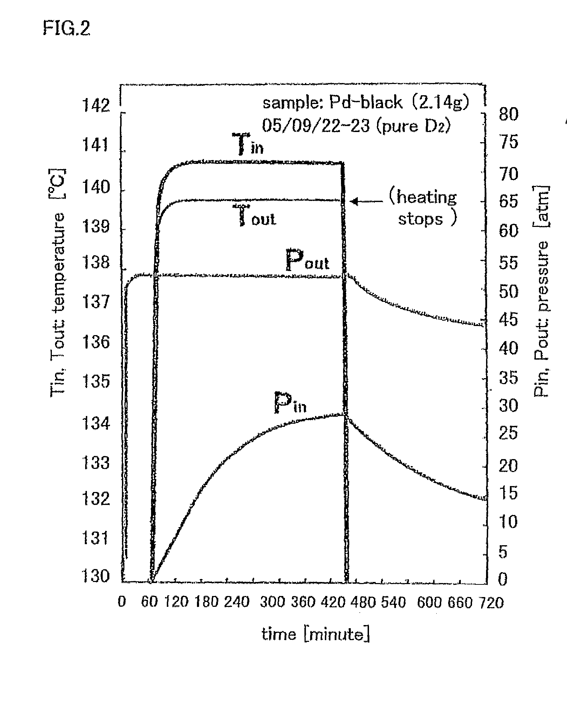

Figure **2** shows an exemplary result of an experiment using the thermal energy generating device **1**. In Figure **2**, the horizontal axis represents an elapsed time (minute) while the vertical axis on the left side represents temperature (°C) and the vertical axis on the right side represents pressure (atm). In the example, 2.14g of Pd-black is used as a sample and deuterium gas, $D_2$, is used as enclosed gas. By supplying the deuterium gas, $D_2$, into the outer space **5**, the pressure level for the outer space **5** is set at 40 atm (Pout = 40atm), and the deuterium gas, $D_2$, in the outer space **5** is heated until the temperature reached a given temperature of 140°C ($T_{out}$ = 140°C). As a result, outputs satisfying Tout < $T_{in}$ is obtained.

Alternatively, deuterium gas, $D_2$, that satisfies the condition of $P_{out}$ = 40atm and Tout = 140°C may be supplied to the outer space **5**. In this case, it is not necessary to heat the deuterium gas, $D_2$, in the outer space **5**. In this case, the outputs satisfying $T_{out}$ < $T_{in}$ are also obtained similar to the experiment of Figure **2**.

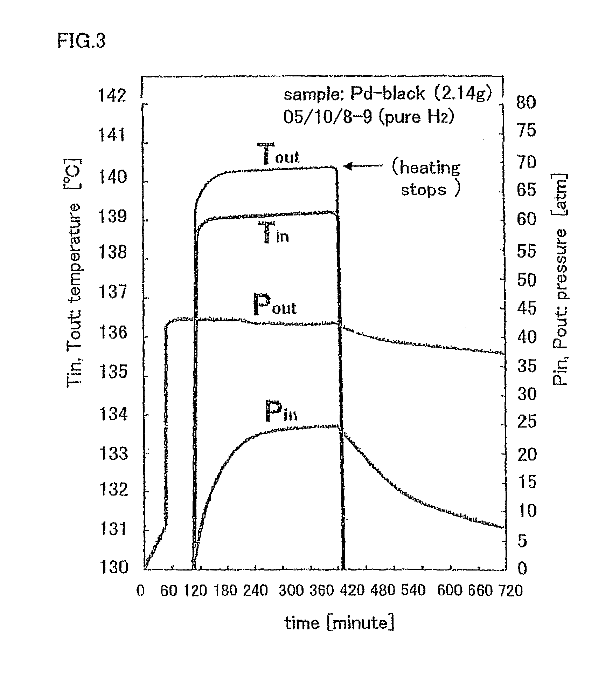

Figure **3** shows an exemplary result of a comparison experiment for comparing with the experimental result of Figure **2**. The horizontal axis and vertical axis are the same as those in Figure **2**. In this example, 2.14g of Pd-black is used as a sample and hydrogen gas, $H_2$, is used as enclosed gas. Again, the conditions of $P_{out}$ = 40atm and Tout = 140°C are set similar to the experiment of Figure **2**. As a result, outputs satisfying $T_{out}$ > $T_{in}$ are obtained.

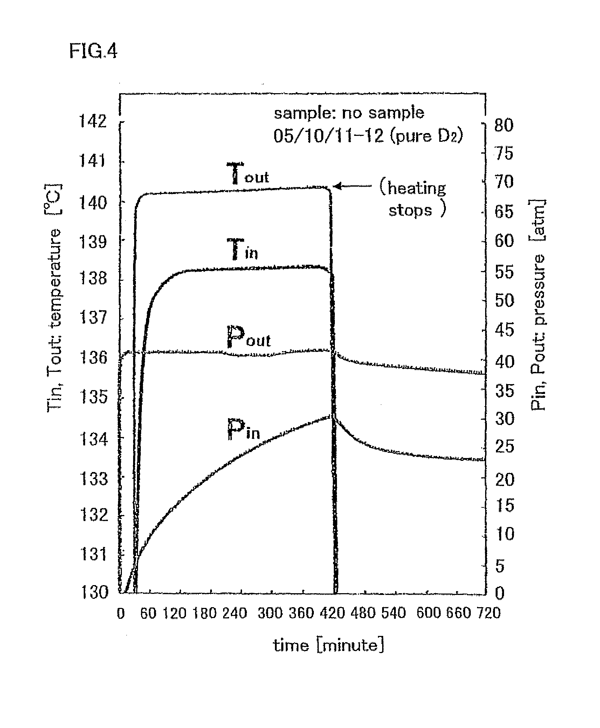

Figure **4** shows an exemplary result of another comparison experiment for comparing with the experimental result of Figure **2**. The horizontal axis and vertical axis are the same as those in Figure **2**. In this example, no sample is used and deuterium gas, $D_2$, is used as enclosed gas. Again, the conditions of $P_{out}$ = 40atm and $T_{out}$ = 140°C are set similar to the experiment of Figure **2**. As a result, outputs satisfying Tout > $T_{in}$ are obtained.

The conditions of $P_{out}$ = 40atm and $T_{out}$ = 140°C are merely one example of conditions for the experiment, and it should be understood that the conditions for the experiment are not limited to this. For example, $P_{out}$ may be set at a pressure level higher than 40atm and Tout may be set at a temperature higher than 140°C.

According to these experimental results, it is recognized that output energy larger than input energy is obtained when Pd-black is used as a sample and the deuterium gas, $D_2$, is used as enclosed gas (the case in Figure **2**). In this case, the efficiency in generating thermal energy corresponds to output energy of 10W or more for input energy of about 2-3W. On the other hand, it is recognized that only output energy smaller than input energy is obtained (i.e. energy is absorbed) when Pd-black is used as a sample and hydrogen gas, $H_2$, is used as enclosed gas (the case in Figure 3) or when no sample is used and deuterium gas, $D_2$, is used as enclosed gas (the case in Figure **4**).

In addition, when the case in Figure **3** is compared with the case in Figure **4**, it is recognized that the output energy of the case in Figure **3** is slightly larger than that of the case in Figure **4**. It is considered that this is because thermal energy is generated by a chemical reaction.

However, as in the case in Figure **2**, it cannot be considered that the thermal energy is generated due to a chemical reaction to cause an "inversion phenomenon" of the temperature as $T_{out}$ < $T_{in}$. Instead, it is considered that such a thermal energy is due to a physical reaction (fusion reaction). The fact that helium gas has been detected in the inner space **4** of the vessel **2** is an evidence that such a fusion reaction has occurred. This is because it is not possible to generate helium gas without the occurrence of the fusion reaction of deuterium atoms, D.

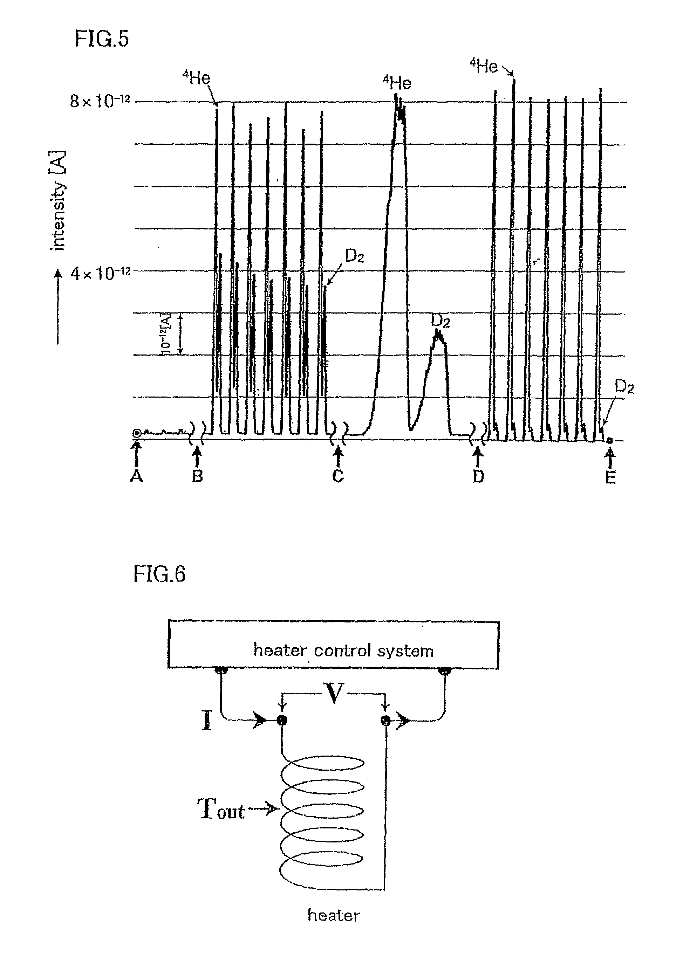

Figure 5 shows an exemplary result of a spectrum analysis for the gas generated in the inner space **4** of the thermal energy generating device **1** in the case where Pd-black is used as a sample and deuterium gas, $D_2$, is used as enclosed gas (the case in Figure **2**) - It is recognized from the spectrum analysis that helium gas, $^4He$, is generated in the inner space **4** of the thermal energy generating device **1**.

In Figure **5**, "A" indicates a start / reference state of a "QMS" before the gas generated in the inner space **4** of the thermal energy generating device **1** (hereinafter referred to as reaction gas) is introduced into the "QMS". In Figure **5**, the period between "B" and "C" indicates a part of M4-spectrum of the reaction gas. The volume of the reaction gas is 5[torr·cc], and the reaction gas is introduced into a dedicated gas tank (having the volume of 2000[cc]) using a getter pump in the state of high vacuum of $10^{-8}$ [torr]. The reaction gas is maintained in the tank for three minutes, and subsequently the reaction gas is introduced into the "closed QMS" (This method was developed and published by the inventor in 1995). In the period between "C" and "D" in Figure **5**, one pair of spectrum is enlarged and more specifically shown among a plurality of spectrum pairs shown in between "B" and "C" in Figure **5**. In the period between "D" and "E", a spectrum is shown after 15 minutes or more have elapsed from the start of the experiment. In this case, it is recognized that there exists almost $^4$He only.

Figure **6** shows a heater control system for automatically changing a current flowing in the heater **8**, which has a constant resistance value, in order to keep the temperature Tout of the outer space **5** of the thermal energy generating device **1** to be constant.

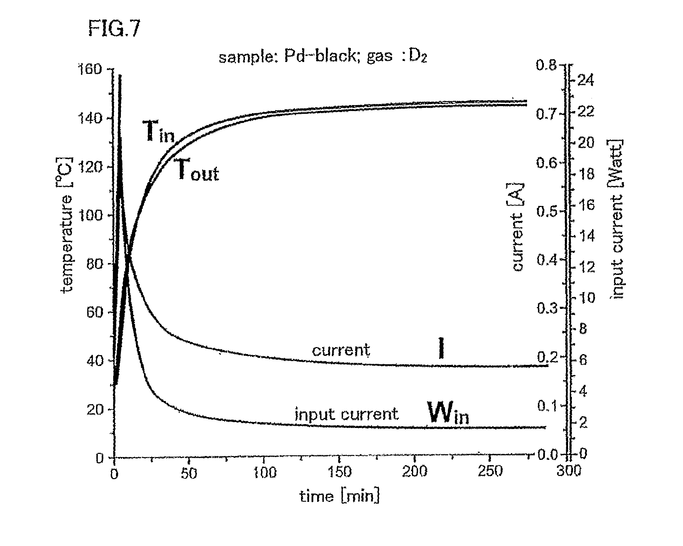

Figure 7 shows an exemplary measurement result of a current I flowing in the heater **8**, in the case where the heater control system shown in Figure **6** is set to keep the temperature Tout constant. An input power $W_{in}$ is determined by the formula $W_{in} = RI^2$. Herein, R denotes a constant resistance value of the heater **8** (e.g. 50Ω), and I denotes a measured current (Amp).

In the case where $T_{out}$ = 140 [°C], the input power $W_{in}$ is 1 to 2 [Watt]. The input power $W_{in}$ required for the thermal energy generating device 1 (DS-Reactor) is only about 1 to 2[%] of the input power $W_{in}$ required for a conventional DS Cathode. Thus, the input power $W_{in}$ required for the DS-Reactor can be a significantly small value [%] compared with the conventional DS Cathode if radiation loss into the air does not occur. An output power from the DS-Reactor is considered almost the same as that of the conventional DS-Cathode. Accordingly, the DS-Reactor is more efficient than the conventional DS-Cathode in terms of the output power to the input power, and therefore the DS-Reactor is suitable for practical use.

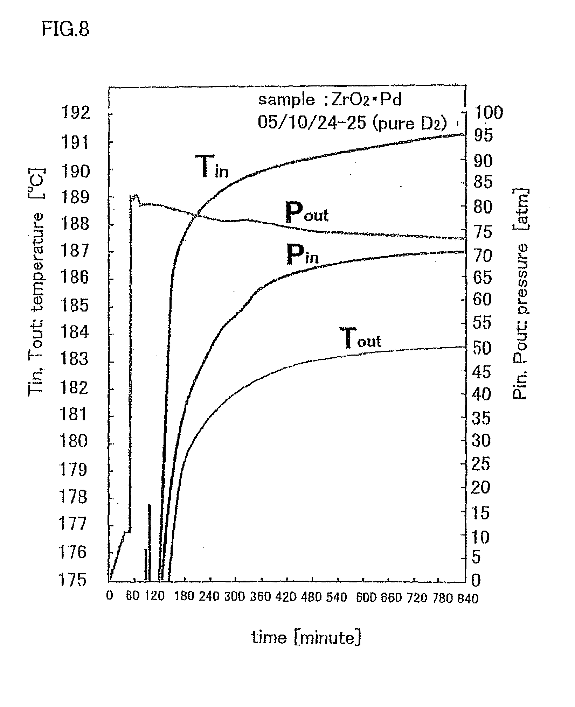

Figure **8** shows an exemplary result of an experiment using the thermal energy generating device **1** The horizontal axis and vertical axis are the same as those in Figure **2**. In this example, nano-Pd ($ZrO_2$-Pd) is used as a sample and deuterium gas, $D_2$, is used as enclosed gas. As a result, outputs satisfying $T_{out} < T_{in}$ are obtained similar to the experiment of Figure **2**. In the case of Figure **8**, it is recognized that the degree of the "inversion phenomenon" of the temperatures Tout < $T_{in}$ is greater compared with the case in Figure **2**. It is considered that such thermal energy causing such "inversion phenomenon" of the temperatures is generated not due to a chemical reaction, but due to a physical reaction (fusion reaction). This is supported by the fact that a large amount of helium gas is detected in the inner space **4** of the vessel **2** compared with the case in Figure **2**.

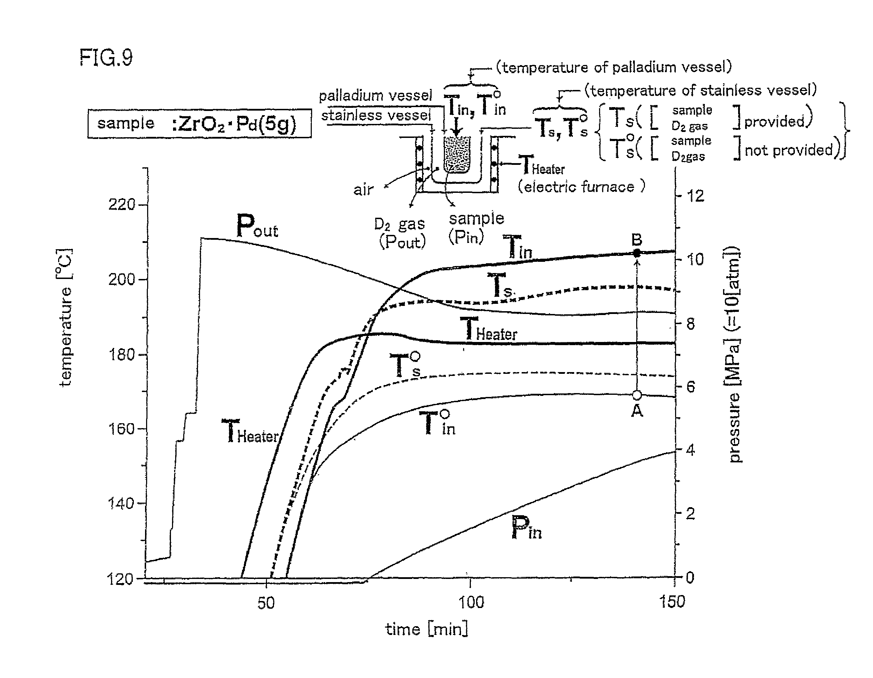

Figure **9** shows another exemplary result of an experiment using the thermal energy generating device **1**. In this example, nano-Pd ($ZrO_2$·Pd) is used as a sample and deuterium gas, $D_2$, is used as enclosed gas similar to the case in Figure **8**. In this example, a palladium vessel is used as the vessel **2** shown in Figure **1** and a stainless vessel is used as the vessel **3** shown in Figure **1**. As shown in Figure **9**, a space filled with air is provided between the heater **8** and the vessel **3** shown in Figure **1**. It is easily understood from Figure **9** that a strong "Cold Fusion" is occurring inside the palladium vessel.

In Figure **9**, $T_{Heater}$ denotes a temperature of the heater **8**; $T_{in}$ denotes a temperature of the palladium vessel when there is a sample provided; $T°_{in}$ denotes a temperature of the palladium vessel when there is no sample provided; $T_s$ denotes a temperature of the stainless vessel when there is a sample provided, and $T°_s$ denotes a temperature of the stainless vessel **3** when there is no sample provided.

In the case where there is no sample provided, the temperature $T°_{in}$ of the palladium vessel becomes lower than $T_{Heater}$ or $T°_s$ (i.e. $T°_{in}$ = 167°C; $T_{Heater} > T°_s > T°_{in}$) when the thermal energy generating device **1** is heated from the outside ($T_{Heater}$ = 185°C). However, in the case where there is a sample provided, the temperature $T_{in}$ becomes higher than $T_s$ (i.e. $T_{in}$ = 210°C; $T_{in} > T_s > T_{Heater}$). Thus, in the case where there is a sample provided, it is recognized that the temperature $T_{in}$ of the palladium vessel becomes significantly higher than a given temperature $T_{Heater}$ and even the temperature $T_s$ of the stainless vessel becomes higher than the given temperature $T_{Heater}$. This is because "Cold Fusion" takes place inside the palladium vessel, and consequently, the palladium vessel functions as a strong heat source.

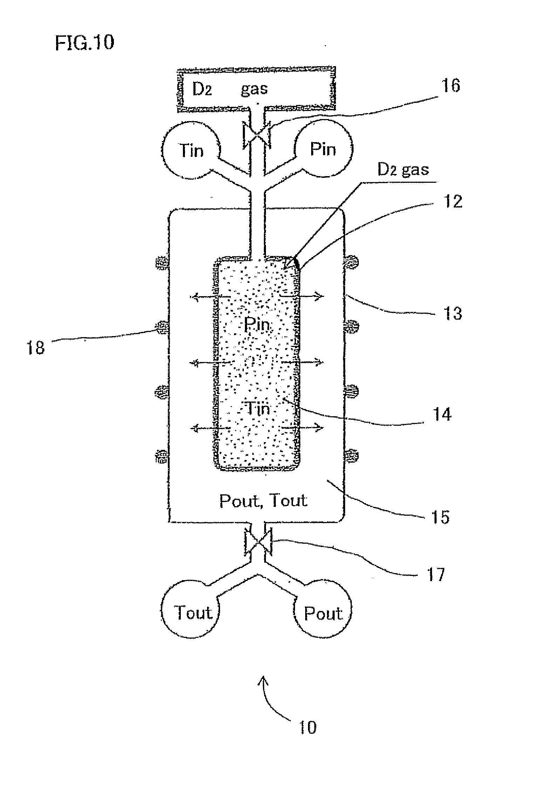

Figure 10 shows an exemplary structure of a thermal energy generating device **10** according to another embodiment of the present invention. The thermal energy generating device **10** is an improved version of a conventional DS-Cell and generates thermal energy using the same principle for the conventional DS-Cell. The thermal energy generating device **10** is also referred to as a DS-Reactor.

The thermal energy generating device **10** includes a vessel **12** made of a substance having deuterium permeability and a vessel **13** located on the outside of the vessel **12**. The vessel **12** is made of palladium, for example. The vessel **13** is made of stainless steel, for example.

A space **14** is formed inside the vessel **12**. Deuterium gas, $D_2$, is supplied into the space **14**. The vessel **12** is configured to provide the deuterium gas, $D_2$, from outside the thermal energy generating device 10 through an open / close valve **16** into the space **14**.

A space **15** is formed between the vessel **12** and the vessel **13** to surround the vessel **12**. In the space **15**, a substance having deuterium absorbability (e.g. ultrafine palladium powder) is enclosed as a sample in a vacuum state. The vessel **13** is configured to exhaust gas generated in the space **15** from the thermal energy generating device **10** through an open / close valve **17**.

Herein, substances described above may be used as a substance having deuterium permeability and a substance having deuterium absorbability.

The thermal energy generating device **10** further includes a heater **18** for maintaining the temperature of deuterium gas, $D_2$, in the space **14** within a predetermined range of temperature. In the example shown in Figure **10,** the heater **18** is provided in a coiled manner around the vessel **13** and is configured to control the temperature of the vessel **13** to control the temperature of deuterium gas, $D_2$, in the space **14.**

When the temperatures of the deuterium gas, $D_2$, in the space **14** and of the vessel **12** are in the range of 70°C to 100°C by the application of heat by the heater **18,** deuterium molecules, $D_2$, of the deuterium gas, $D_2$, in the space **14** pass through the vessel **12** as deuterium ions, $D^+$, and then, the deuterium ions, $D^+$, that have passed through the vessel **12** are introduced into the space 15 as a deuterium atom, D. As a result, the space **15** will be filled with gas of intermingled deuterium atoms, D, and the deuterium gas, $D_2$, as time passes. As a result, the pressure level in the space **15** will be almost the same as the pressure level of the deuterium gas $D_2$ in the space **14**. Accordingly, if the pressure level of the deuterium gas, $D_2$, in the space **14** reaches a range from several thousand to several tens of thousands atmospheres, the pressure level in the space **15** will also reach almost the same state. Under such a pressure level, the deuterium atom, D, is absorbed by the substance having deuterium absorbability, which is enclosed in the space **15.** Such absorption of the deuterium atom, D, occurs as several deuterium atoms, D, are cohered into innumerable octahedrons of a crystal lattice of the substance having deuterium absorbability, which is enclosed in the space **15.** In this manner, "Pycnodeuterium" or "Solid-deuteron" is generated in the space **15,** and a fusion reaction takes place for a plurality of deuterium atoms, D, in this Pycnodeuterium or Solid-deuteron, so that helium gas is generated in addition to thermal energy. An equation for this reaction is provided below.

$$^2D + {}^2D = {}^4He + \text{lattice energy (23.8MeV)}$$

The principle of this thermal energy generation is the same as the principle of the thermal energy generation for the DS-Cell **100** described above. This fusion reaction progresses gently without generating any neutrons, and therefore such a fusion reaction is extremely desirable in view of industrial applicability and environmental preservation compared with a well known DD thermal fusion reaction in an ultrahigh temperature state, in which tritium, T, and a neutron are generated by an ultra-radical collision of deuterium atoms.

In the following description, the space **14** inside the vessel **12** having deuterium permeability is referred to as an "inner space **14",** and the temperature of the inner space **14** is denoted as $T_{in}$, and the pressure of the inner space **14** is denoted as $P_{in}$. In addition, the space **15** outside the vessel **12** having deuterium permeability is referred to as an "outer space **15",** and the temperature of the outer space **15** is denoted as $T_{out}$, and the pressure of the outer space **15** is denoted as $P_{out}$.

Whereas deuterium is transferred from the outer space **5** to the inner space **4** in the thermal energy generating device **1,** deuterium is transferred from the inner space **14** to the outer space **15** in the thermal energy generating device **10.** Although the transfer direction of deuterium in the thermal energy generating device **1** is opposite to that of the thermal energy generating device **10** as described above, a thermal energy generating method in the thermal energy generating device **1** is the common to a thermal energy generating method in the thermal energy generating device **10.**

That is, the common thermal energy generating method is a thermal energy generating method for generating thermal energy using a thermal energy generating device having a "first space" and a "second space" that are separated from each other by a vessel having deuterium permeability (e.g. a palladium vessel) . In the second space, a substance having deuterium permeability is enclosed in a vacuum state.

The common thermal energy generating method includes the steps of supplying deuterium gas in the first space and maintaining a temperature of the deuterium gas in the first space within a predetermined temperature range so that deuterium molecules of the deuterium gas in the first space passes through the vessel as deuterium ions.

Herein, the "predetermined temperature range" is defined as a temperature range required to cause the phenomenon in which the deuterium molecules of the deuterium gas in the first space pass through the vessel as deuterium ions. For example, a heater as a heating section can be used as a section for maintaining the temperature of the deuterium gas inside the first space within the "predetermined temperature range". Alternatively, any other section may be used as this section for maintaining.

Herein, the case where the "first space" is the outer space 5 and the "second space" is the inner space **4** corresponds to a thermal energy generating method using the thermal energy generating device 1 (Figure 1). As well, the case where the "first space" is the inner space **14** and the "second space" is the outer space **15** corresponds to a thermal energy generating method using the thermal energy generating device **10** (Figure **10).**

The thermal energy generating device **10** can obtain output energy larger than input energy similar to the case where the thermal energy generating device **1** is used.

In addition, with respect to the thermal energy generating device **10,** a heater **18a** (not shown) maybe inserted in the inner space **14** instead of using the heater **18** provided in a coiled manner around the vessel **13**, so that the heater **18a** generates heat to control the temperature of the deuterium gas in the inner space **14.** The heater **18a** can be a stick shaped heater, for example. In this case, the deuterium gas in the inner space **14** is directly heated by the heater **18a**, and therefore the temperature control is easily performed compared with the case where the deuterium gas in the inner space **14** is indirectly heated by the heater **18.**

Further, in this case, a cooling **tube 19** (not shown) may be provided in a coiled manner around the vessel **13** to transfer the thermal energy generated in the vessel **13** to a coolant (e.g. water) flowing inside the cooling tube **19,** so that the thermal energy generated inside the thermal energy generating device 10 can be transferred to the external of the thermal energy generating device **10.** It is possible to further improve the efficiency in generating the thermal energy because the thermal energy generated in the vessel. **12** can be "received" externally by such a configuration.

In addition, with respect to the thermal energy generating device **10,** it is possible that a coiled metal tube (e.g. a palladium tube having a diameter of several millimeters) is formed as the vessel **12** and the coiled metal tube is embedded in the substance having deuterium absorbability (e.g. ultrafine palladium powder), which is enclosed in the outer space **15.** This configuration provides an advantage of not requiring the heater **18** (heater **18a)** described above because heat is generated by the deuterium gas running through inside the metal tube (the vessel **12** serves as a heater).

In addition, with respect to the thermal energy generating device **1,** it is possible to maintain the temperature of the deuterium gas, $D_2$, inside the space 5 within a predetermined temperature range, using the heat of the gas transferred to the external of the thermal energy generating device **1** through the open / close valve **6.** By reusing the heat of the gas transferred to the external of the thermal energy generating device **1** in order to heat the deuterium gas, $D_2$, inside the space **5,** it is possible to reduce the output of the heater **8** or to eliminate the heater **8.** This is also an advantage.

As described above, according to the present invention, it is possible to provide a thermal energy generation method and a thermal energy generating device, which have an excellent efficiency in generating thermal energy and are suitable for practical use.

As described above, the present invention is exemplified by the use of its preferred embodiments. However, the present invention should not be interpreted solely based on the embodiments described above. It is understood that the scope of the present invention should be interpreted solely based on the claims. It is also understood that those skilled in the art can implement equivalent scope of technology, based on the description of the present invention and common knowledge from the description of the detailed preferred embodiments of the present invention.

INDUSTRIAL APPLICABILITY

The present invention is useful for providing a thermal energy generating method and a thermal energy generating device, which have an excellent efficiency in generating thermal energy and are suitable for practical use.

**Claims**

1.  A thermal energy generating method for generating thermal energy using a thermal energy generating device including a first space and a second space separated by a first vessel having deuterium permeability, wherein a substance having deuterium absorbability is enclosed in a vacuum state in the second space, the method comprising the steps of:

    supplying deuterium gas to the first space; and
    maintaining a temperature of the deuterium gas in the first space within a predetermined range of temperature so that deuterium molecules of the deuterium gas in the first space pass through the first vessel as deuterium ions.

2.  A thermal energy generating method according to claim 1, wherein the first space is a space formed between the first vessel and a second vessel located outside the first vessel, and the second space is a space formed inside the first vessel.

3.  A thermal energy generating method according to claim 1, wherein the first space is a space formed inside the first vessel, and the second space is a space formed between the first vessel and a second vessel located outside the first vessel.

4. A thermal energy generating device for generating thermal energy, comprising:

   a first vessel having deuterium permeability; and
   a first space and a second space separated by the first vessel,
   wherein a substance having deuterium absorbability is enclosed in a vacuum state in the second space, the thermal energy generating device further comprising:
   a section for supplying deuterium gas to the first space; and
   a section for maintaining a temperature of the deuterium gas in the first space within a predetermined range so that deuterium molecules of the deuterium gas in the first space pass through the first vessel as deuterium ions.

5. A thermal energy generating device according to claim 4,
   wherein the thermal energy generating device further includes a second vessel located outside the first vessel, and
   wherein the first space is a space formed between the first vessel and the second vessel, and the second space is a space formed inside the first vessel.

6. A thermal energy generating device according to claim 4,
   wherein the thermal energy generating device further includes a second vessel located outside the first vessel, and
   wherein the first space is a space formed inside the first vessel and the second space is a space formed between the first vessel and the second vessel.

FIG.1

FIG.2

FIG.3

FIG.4

FIG.5

FIG.6

## FIG.7

sample: Pd-black; gas : $D_2$

FIG.8

FIG.9

sample : ZrO₂·Pd(5g)

FIG.10

FIG.11

## INTERNATIONAL SEARCH REPORT

| International application No. |
| --- |
| PCT/JP2006/323367 |

A. CLASSIFICATION OF SUBJECT MATTER
*G21B3/00*(2006.01)i

According to International Patent Classification (IPC) or to both national classification and IPC

B. FIELDS SEARCHED

Minimum documentation searched (classification system followed by classification symbols)
G21B3/00

Documentation searched other than minimum documentation to the extent that such documents are included in the fields searched
Jitsuyo Shinan Koho        1922-1996    Jitsuyo Shinan Toroku Koho    1996-2007
Kokai Jitsuyo Shinan Koho  1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 6-222173 A  (Yoshiaki ARATA),<br>12 August, 1994 (12.08.94),<br>Par. Nos. [0029] to [0030]; Fig. 8<br>(Family: none) | 1-6 |
| Y | JP 7-209457 A  (Sanyo Electric Co., Ltd.),<br>11 August, 1995 (11.08.95),<br>Par. No. [0020]; Fig. 2<br>(Family: none) | 1-6 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 February, 2007 (07.02.07) | Date of mailing of the international search report<br>20 February, 2007 (20.02.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

**EP 1 953 764 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5647970 A

- WO 9535574 A

**Non-patent literature cited in the description**

- *21st CENTURY SCIENCE & TECHNOLOGY,* 1995